# EUROPEAN PATENT APPLICATION

(11) **EP 4 708 495 A1**
(43) Date of publication of application: **11.03.2026**
(21) Application number: 25199452.1
(22) Date of filing: 01.09.2025
(51) Int. Cl.: H01M 50/204, H01M 50/207, H01M 50/24, H01M 50/271, H01M 50/103, H01M 50/184, H01M 50/186

(54) **ENERGY STORAGE DEVICE AND ELECTRIC DEVICE**

(30) Priority: 03.09.2024 CN 202422155226 U
(71) Applicant: Xiamen Ampack Technology Limited, Xiamen City, Fujian Province, 361000 (CN)
(72) Inventor: BAI, Huaiming, Xiamen City, Fujian Province, China, 361000 (CN)
(74) Representative: Icosa

(57) **Abstract**

An energy storage device includes a first housing (1), provided with a first cavity (1s), the first housing (1) including a first abutting member (101) located in the first cavity (1s); a second housing (2), provided with a second cavity (2s) and a second abutting member (201), the second abutting member (201) being connected to the second housing (2); and a sealing element (3), located in the first cavity (1s), the sealing element (3) being connected between the first abutting member (101) and the second abutting member (201), where the first cavity (1s) and the second cavity (2s) communicate to form a first space (12s), and the first space (12s) is configured to accommodate a cell assembly and/or an electrical assembly (4).

## Description

### TECHNICAL FIELD

Embodiments of this application relates to the field of energy storage technologies.

### BACKGROUND

Energy storage devices refer to all kinds of devices that can store electrical energy, and play a vital role in the power system, especially in new energy grid connection, grid frequency regulation, peak shaving and valley filling, emergency backup and so on. In some application scenarios, an energy storage device includes a housing and a cell assembly/electrical assembly, and the cell assembly/electrical assembly is accommodated in the housing. Generally, the housing includes a first housing and a second housing, and a sealing element needs to be provided between the first housing and the second housing to realize sealing between the first housing and the second housing.

### SUMMARY

In view of the above problems, embodiments of this application provide an energy storage device and an electric device that overcome or at least partially solve the sealing problem between the first housing and the second housing described above.

According to one aspect of embodiments of this application, an energy storage device is provided and includes a first housing, provided with a first cavity, the first housing including a first abutting member located in the first cavity; a second housing, provided with a second cavity and a second abutting member, the second abutting member being connected to the second housing; and a sealing element, connected between the first abutting member and the second abutting member, where the first cavity and the second cavity communicate to form a first space, and the first space is configured to accommodate a cell assembly and/or an electrical assembly. By providing the first abutting member in the first housing, providing the second abutting member in the second housing, and providing the sealing element, located in the first cavity, the sealing element being connected between the first abutting member and the second abutting member, sealing of the sealing element to the first housing and the second housing is realized, and then the sealing can be realized by the first abutting member, the sealing element, and the second sealing element, regardless of whether the first housing or the second housing is of a special-shaped space structure.

In one or more of the above optional embodiments, the first housing includes a first wall and a first side portion, the first side portion is disposed around the first wall, and the first wall and the first side portion form the first cavity; and the first abutting member is connected to the first side portion. The first abutting member is specifically disposed on the first side portion of the first housing, the first side portion surrounds the first wall to form the first cavity, the first abutting member is located in the first cavity, and the first abutting member is located on the first side portion. Compared to the case where the first abutting member is located on the first wall, then the technical solution provided by the of this application at least facilitates sealing of the first housing and the second housing by means of the sealing element.

In one or more of the above optional embodiments, the first abutting member includes a first bent portion and a first abutting portion; and the first bent portion is formed by bending from the first side portion to the first cavity, the first abutting portion is formed by bending from the first bent portion, and the first abutting portion abuts against the sealing element. By the setting, the first bent portion and the first abutting portion are both formed by bending, and the first abutting member including the first bent portion and the first abutting portion is formed by bending the first side portion. Compared to other modes, such as the case where the first abutting member is welded to the first side portion, the technical solution of the first abutting member provided by some embodiments of this application at least can facilitate machining of at least the first abutting member, the first abutting member and the first side portion are seamlessly connected, the sealing performance of at least the first housing provided by some embodiments of this application is good, and the sealing performance of the first housing and the second housing after being sealed by the sealing element is good.

In one or more of the above optional embodiments, the first bent portion is attached to the first side portion. The first bent portion is formed by bending the first side portion, and the first bent portion is attached to the first side portion. Then, the technical solution provided by some embodiments of this application can at least realize that the first bent portion is not prone to deforming relative to the first side portion, and thus the first abutting portion is not prone to deforming and displacing, the first abutting portion can provide a good support for the sealing element, and the sealing failure of the sealing element to the first housing and the second housing is reduced.

In one or more of the above optional embodiments, the second housing includes a second wall and a second side portion, the second side portion is disposed around the second wall, and the second wall and the second side portion form the second cavity; and the second abutting member is disposed on the second side portion. The second abutting member is specifically disposed on the second side portion of the second housing, the second side portion surrounds the second wall to form the second cavity, the second abutting member is located in the second cavity, and the second abutting member is located on the second side portion. Compared to the case where the second abutting member is located on the second wall, then the technical solution provided by some embodiments of this application at least facilitates the sealing of the first housing and the second housing by means of the sealing element.

In one or more of the above optional embodiments, the second abutting member includes a second bent portion, a third bent portion, and a second abutting portion, and the third bent portion and the second abutting portion are located in the first cavity; the second bent portion extends from the second side portion, the second bent portion and the second abutting portion are spaced apart to form a gap, and the third bent portion is connected to the second bent portion and the second abutting portion; and the second abutting portion abuts against the sealing element. By the setting, the second bent portion, the third bent portion, and the second abutting portion are all formed by bending, and the second abutting member including the second bent portion, the third bent portion, and the second abutting portion is formed by bending the second side portion. Compared to other modes, such as the case where the second abutting member is welded to the second side portion, the technical solution of the second abutting member provided by some embodiments of this application at least can facilitate machining of at least the second abutting member, the second abutting member and the second side portion are seamlessly connected, the sealing performance of at least the second housing provided by some embodiments of this application is good, the second housing is waterproof and antifouling, and the sealing performance of the first housing and the second housing after being sealed by the sealing element is good.

In one or more of the above optional embodiments, the first abutting portion and the second abutting portion are disposed in parallel. The sealing element is disposed between the first abutting portion and the second abutting portion disposed in parallel, which at least facilitates provision of the sealing element between the first abutting portion and the second abutting portion, at least enhances the sealing of the sealing element to the first abutting member and the second abutting member, and enhances the sealing of the sealing element to the first housing and the second housing.

In one or more of the above optional embodiments, the second abutting portion and the second bent portion are disposed in parallel. By the setting, the machining is convenient at least when the second side portion is machined to form the second abutting portion and the second bent portion. In addition, the first abutting portion and the second abutting portion are disposed in parallel, and the second abutting portion and the second bent portion are disposed in parallel, which at least facilitates the provision of the sealing element between the first abutting portion and the second abutting portion, facilitates the sealing of the sealing element between the first abutting member and the second abutting member, and further enhances the sealing of the sealing element to the first housing and the second housing.

In one or more of the above optional embodiments, the first housing includes the first wall disposed opposite to the second cavity, the first wall includes an inclined portion, and the first abutting member is located on a side of the inclined portion, the side of the inclined portion being a side facing towards the second cavity. The first wall may include the inclined portion, the first side portion extends from the inclined portion, the first abutting member is located on the side that is of the inclined portion and that is close to the second cavity, the sealing element is disposed between the first abutting member and the second abutting member by means of the first abutting member disposed close to the inclined portion, the sealing between the inclined portion close to the first housing and the second housing is realized by means of the sealing element, the sealing is realized for the special-shaped space structure having the inclined portion, and the technical solution provided by some embodiments of this application at least has a wide application range, is applicable to the special-shaped space structure, and is more applicable to a conventional regular space structure.

According to another aspect of some embodiments of this application, an electric device is provided and includes the above energy storage device.

The beneficial effects of some embodiments of this application include: the energy storage device is provided and includes a first housing, provided with a first cavity, the first housing including a first abutting member located in the first cavity; a second housing, provided with a second cavity and a second abutting member, the second abutting member being connected to the second housing; and a sealing element, connected between the first abutting member and the second abutting member, where the first cavity and the second cavity communicate to form a first space, and the first space is configured to accommodate a cell assembly and/or an electrical assembly. By providing the first abutting member in the first housing, providing the second abutting member in the second housing, and allowing the sealing element to be connected between the first abutting member and the second abutting member, the sealing of the sealing element to the first housing and the second housing is realized, and then the sealing can be realized by the first abutting member, the sealing element and the second sealing element, regardless of whether the first housing or the second housing is of a special-shaped space curved surface.

### BRIEF DESCRIPTION OF DRAWINGS

One or more embodiments are described exemplarily with reference to accompanying drawings corresponding to some embodiments. The exemplary description does not constitute any limitation on some embodiments. Components marked with the same reference numeral in the drawings represent similar components. Unless otherwise specified, the drawings do not constitute any scale limitation.
FIG. 1 is a schematic diagram of an energy storage device according to an embodiment of this application;
FIG. 2 is a schematic diagram along A-A in FIG. 1 according to an embodiment of this application;
FIG. 3 is a schematic diagram in which a sealing element is connected to a first housing according to an embodiment of this application;
FIG. 4 is an enlarged schematic diagram of a portion B in FIG. 2 according to an embodiment of this application; and
FIG. 5 is a schematic diagram along C-C in FIG. 3 according to an embodiment of this application.

### DETAILED DESCRIPTION OF EMBODIMENTS

For ease of understanding this application, a more detailed description of the present application is given below in conjunction with the accompanying drawings and some specific embodiments. It should be noted that when an element is expressed as "fixed to" another element, it may be directly on the other element, or there may be one or more intervening elements therebetween. When an element is described as "connected" to another element, it may be directly connected to the other element, or there may be one or more intervening elements therebetween. The terms "vertical", "horizontal", "left", "right", "inside", "outside" and similar expressions used in the description are for illustrative purposes only.

Unless otherwise defined, all technical and scientific terms used herein have the same meanings as commonly understood by those skilled in the art of this application. Terms used in the description of this application are for the purpose of describing specific some embodiments only and are not intended to limit this application. The term "and/or" as used herein includes any and all combinations of one or more related listed items.

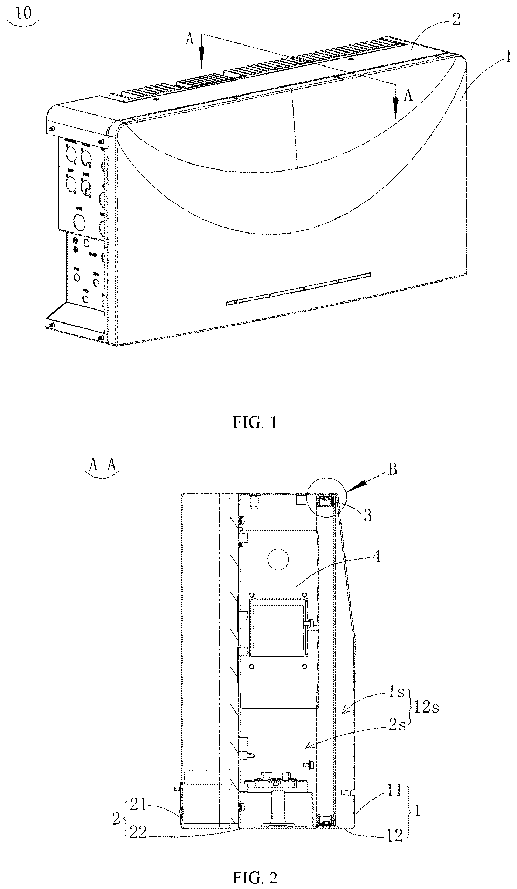

Referring to FIG. 1 and FIG. 2, an embodiment of this application provides an energy storage device 10. The energy storage device 10 includes a first housing 1, a second housing 2 and a sealing element 3, and the sealing element 3 is connected between the first housing 1 and the second housing 2. Sealing between the first housing 1 and the second housing 2 is realized by means of the sealing element 3. Optionally, the sealing element 3 includes a sealing ring. Optionally, the sealing element 3 includes glue.

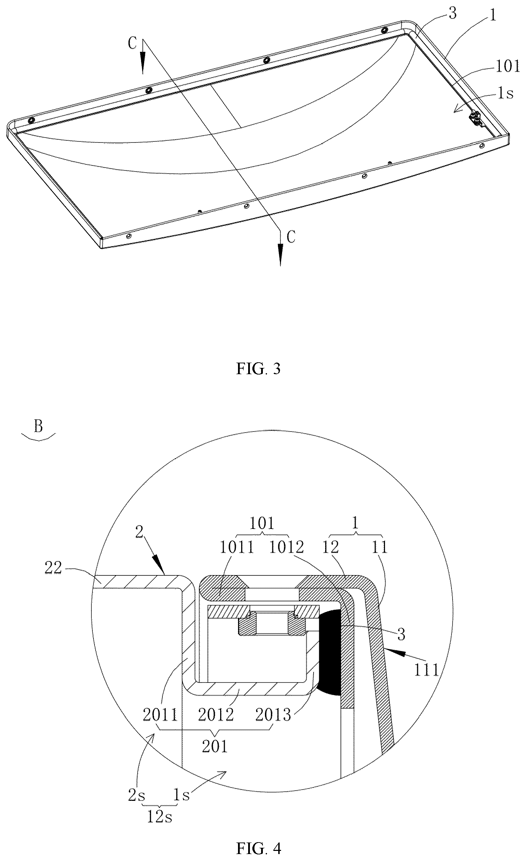

Referring to FIG. 3, the first housing 1 is provided with a first cavity 1s, and the first housing 1 includes a first abutting member 101 located in the first cavity 1s. The sealing element 3 is located in the first cavity 1s, and the first abutting member 101 is connected to the sealing element 3.

Referring to FIG. 4, the second housing 2 is provided with a second cavity 2s and a second abutting member 201, and the second abutting member 201 is connected to the sealing element 3 to realize the sealing between the first housing 1 and the second housing 2.

Referring to FIG. 2, the first cavity 1s of the first housing 1 and the second cavity 2s of the second housing 2 communicate to form a first space 12s, and the first space 12s is configured to accommodate a cell assembly and/or an electrical assembly 4.

Referring to FIG. 4, the sealing element 3 is connected between the first abutting member 101 and the second abutting member 201. The sealing element 3 is connected to the first abutting member 101, and the sealing element 3 is connected to the second abutting member 201 to realize the sealing between the first abutting member 101 and the second abutting member 201.

Referring to FIG. 4, in some embodiments, the first housing 1 includes a first wall 11 and a first side portion 12, and the first wall 11 and the second cavity 2s are disposed opposite to each other. The first side portion 12 is disposed around the first wall 11, and the first wall 11 and the first side portion 12 form the first cavity 1s. The first abutting member 101 is connected to the first side portion 12. The first side portion 12 and the first wall 11 form the first cavity 1s, and the first abutting member 101 is closer to the second housing 2 compared to the first wall 11. Then, the technical solution provided by some embodiments of this application can at least facilitate the sealing between the first housing 1 and the second housing 2 by means of the sealing element 3 disposed at the first abutting member 101 closer to the second housing 2.

Referring to FIG. 4, in some embodiments, the first abutting member 101 includes a first bent portion 1011 and a first abutting portion 1012. The first bent portion 1011 is formed by bending from the first side portion 12 to the first cavity 1s, the first abutting portion 1012 is formed by bending from the first bent portion 1011, and the first abutting portion 1012 abuts against the sealing element 3. By the setting, the first bent portion 1011 and the first abutting portion 1012 are both formed by bending. The technical solution of the first abutting member 101 provided by some embodiments of this application facilitates machining of the first abutting member 101, the first abutting member 101 and the first side portion 12 are seamlessly connected, the sealing performance of at least the first housing 1 provided by some embodiments of this application is good, and the sealing performance of the first housing 1 and the second housing 2 after being sealed by the sealing element 3 is good.

In some embodiments, referring to FIG. 4, the first bent portion 1011 is attached to the first side portion 12. The first bent portion 1011 is formed by bending the first side portion 12, and the first bent portion 1011 is attached to the first side portion 12. Then, the technical solution provided by some embodiments of this application can at least realize that the first bent portion 1011 is not prone to deforming relative to the first side portion 12, and thus the first abutting portion 1012 is not prone to deforming and displacing, the first abutting portion 1012 can provide a good support for the sealing element 3, and the sealing failure of the sealing element 3 to the first housing 1 and the second housing 2 is reduced.

Referring to FIG. 2 and FIG. 4, in some embodiments, the second housing 2 includes a second wall 21 and a second side portion 22, and the second wall 21 is a wall of the second housing 2 that is disposed opposite to the first cavity 1s of the first housing 1. The second side portion 22 is disposed around the second wall 21, and the second wall 21 and the second side portion 22 form the second cavity 2s. The technical solution provided by some embodiments of this application can at least facilitate the sealing between the first housing 1 and the second housing 2 by means of the sealing element 3 disposed at the second abutting member 201 closer to the first housing 1.

Referring to FIG. 4, in some embodiments, the second abutting member 201 includes a second bent portion 2011, a third bent portion 2012, and a second abutting portion 2013; the third bent portion 2012 and the second abutting portion 2013 are located in the first cavity 1s; and the second bent portion 2011 extends from the second side portion 22, the second bent portion 2011 and the second abutting portion 2013 are spaced apart to form a gap, and the third bent portion 2012 is connected to the second bent portion 2011 and the second abutting portion 2013. The second abutting portion 2013 abuts against the sealing element 3.

The second bent portion 2011, the third bent portion 2012, and the second abutting portion 2013 are all formed by bending, and the second abutting member 201 including the second bent portion 2011, the third bent portion 2012, and the second abutting portion 2013 is formed by bending the second side portion 22. The technical solution of the second abutting member 201 provided by some embodiments of this application can facilitate machining of the second abutting member 201, the second abutting member 201 and the second side portion 22 are seamlessly connected, the sealing performance of at least the second housing 2 provided by some embodiments of this application is good, the second housing 2 is waterproof and antifouling, and the sealing performance of the first housing 1 and the second housing 2 after being sealed by the sealing element 3 is good.

The third bent portion 2012 is formed by bending and extending the second bent portion 2011 in a direction oriented away from the second wall 21, and the third bent portion 2012 and the second abutting portion 2013 connected to the third bent portion 2012 are disposed away from the second housing 2 and close to the first housing 1. When the first housing 1 and the second housing 2 are snapped together, the third bent portion 2012 and the second abutting portion 2013 may extend into the first cavity 1s of the first housing 1 and are connected to the first abutting member 101 of the first housing 1 by means of the sealing element 3, thereby enhancing the sealing between the first housing 1 and the second housing 2.

Referring to FIG. 4, in some embodiments, the first abutting portion 1012 and the second abutting portion 2013 are disposed in parallel. The sealing element 3 is connected between the first abutting portion 1012 and the second abutting portion 2013 disposed in parallel, which facilitates provision of the sealing element 3 between the first abutting portion 1012 and the second abutting portion 2013, enhances sealing of the sealing element 3 to the first abutting member 101 and the second abutting member 201, and enhances the sealing of the sealing element 3 to the first housing 1 and the second housing 2.

Referring to FIG. 4, in some embodiments, the second abutting portion 2013 and the second bent portion 2011 are disposed in parallel. By the setting, the machining is convenient when the second side portion 22 is machined to form the second abutting portion 2013 and the second bent portion 2011. In addition, the second bent portion 2011, the second abutting portion 2013, and the first abutting portion 1012 are disposed in parallel, which at least facilitates the provision of the sealing element 3 between the first abutting portion 1012 and the second abutting portion 2013, facilitates the sealing of the sealing element 3 between the first abutting member 101 and the second abutting member 201, and further enhances the sealing of the sealing element 3 to the first housing 1 and the second housing 2.

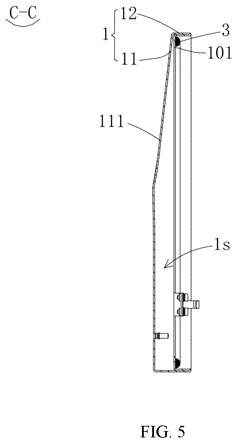

Referring to FIG. 4 and FIG. 5, in some embodiments, the first housing 1 includes the first wall 11 disposed opposite to the second cavity 2s, the first wall 11 includes an inclined portion 111, the first side portion 12 extends from the inclined portion 111, and the first abutting member 101 is located on a side that is of the inclined portion 111 and that is close to the second cavity 2s. The first wall 11 may include the inclined portion 111, the first abutting member 101 is located on the side that is of the inclined portion 111 and that is close to the second cavity 2s, the sealing element 3 is connected between the first abutting member 101 and the second abutting member 201 by means of the first abutting member 101 disposed close to the inclined portion 111, the sealing between the inclined portion 111 close to the first housing 1 and the second housing 2 is realized by means of the sealing element 3, the sealing is realized for the special-shaped space structure having the inclined portion 111, and the technical solution provided by some embodiments of this application at least has a wide application range, is applicable to the special-shaped space structure, and is more applicable to a conventional regular space structure.

The inclined portion 111 may also have a curved structure, such that the technical solution provided by some embodiments of this application is applicable to a particular special-shaped space curved structure.

The first wall 11 may also merely include the conventional regular space structure, sealing of the first housing 1 and the second housing 2 having the conventional regular space structure may also be realized by the first abutting member 101 of the first housing 1 and the sealing element 3 provided by some embodiments of this application, and universality of the technical solution set forth in the embodiments of this application is high.

An embodiment of this application further provide an example of an electric device. The electric device includes a load and the above energy storage device 10. The specific structure and function of the energy storage device 10 may be referred to the above embodiments and will not be repeated here. The energy storage device 10 is connected to the load, and configured to supply power to the load.

It is hereby noted that preferred embodiments of this application are given in the description of this application and the accompanying drawings thereof. However, this application may be implemented in many different forms and is not limited to some embodiments described in the description. These embodiments are not taken as an additional limitation on contents of this application, but are provided for the purpose of ensuring a more thorough and comprehensive understanding of the disclosure of this application. Moreover, the foregoing technical features continue to be combined to form various embodiments not listed above, which are all regarded as within the scope recited in the description of this application. Further, a person of ordinary skill in the art may make improvements or variations according to the foregoing illustrations, and all such improvements and variations shall fall within the scope of protection of the appended claims of this application.

## Claims

1. An energy storage device, **characterized in that** the energy storage device comprises:
a first housing (1) provided with a first cavity (1s), the first housing (1) comprising a first abutting member (101) located in the first cavity (1s);
a second housing (2) provided with a second cavity (2s) and a second abutting member (201), the second abutting member (201) being connected to the second housing (2); and
a sealing element (3) located in the first cavity (1s), the sealing element (3) being connected between the first abutting member (101) and the second abutting member (201), wherein
the first cavity (1s) and the second cavity (2s) communicate to form a first space (12s), and the first space (12s) is configured to accommodate a cell assembly and/or an electrical assembly (4).

2. The energy storage device according to claim 1, wherein the first housing (1) comprises a first wall (11) and a first side portion (12), the first side portion (12) is disposed around the first wall (11), and the first wall (11) and the first side portion (12) form the first cavity (1s); and
the first abutting member (101) is connected to the first side portion (12).

3. The energy storage device according to claim 2, wherein the first abutting member (101) is closer to the second housing (2) than the first abutting member (101) from the first wall (11).

4. The energy storage device according to claim 2, wherein the first abutting member (101) comprises a first bent portion (1011) and a first abutting portion (1012); and
the first bent portion (1011) is formed by bending from the first side portion (12) to the first cavity (1s), the first abutting portion (1012) is formed by bending from the first bent portion (1011), and the first abutting portion (1012) abuts against the sealing element (3).

5. The energy storage device according to claim 4, wherein the first bent portion (1011) is attached to the first side portion (12).

6. The energy storage device according to claim 4, wherein the second housing (2) comprises a second wall (21) and a second side portion (22), the second side portion (22) is disposed around the second wall (21), and the second wall (21) and the second side portion (22) form the second cavity (2s); and
the second abutting member (201) is disposed on the second side portion (22).

7. The energy storage device according to claim6, wherein the second abutting member (201) comprises a second bent portion (2011), a third bent portion (2012), and a second abutting portion (2013), and the third bent portion (2012) and the second abutting portion (2013) are located in the first cavity (1s);
the second bent portion (2011) extends from the second side portion (22), the second bent portion (2011) and the second abutting portion (2013) are spaced apart to form a gap, and the third bent portion (2012) is connected to the second bent portion (2011) and the second abutting portion (2013); and
the second abutting portion (2013) abuts against the sealing element (3).

8. The energy storage device according to claim 7, wherein the first abutting portion (1012) and the second abutting portion (2013) are disposed in parallel.

9. The energy storage device according to claim 7, wherein the second abutting portion (2013) and the second bent portion (2011) are disposed in parallel.

10. The energy storage device according to claim 7, wherein the third bent portion (2012) is formed by bending and extending the second bent portion (2011) in a direction oriented away from the second wall (21).

11. The energy storage device according to claim 7, wherein the first abutting portion (1012) abuts against the sealing element (3).

12. The energy storage device according to any one of claims 2 to 11, wherein the first housing (1) comprises the first wall (11) disposed opposite to the second cavity (2s), the first wall (11) comprises an inclined portion (111), the first side portion (12) extends from the inclined portion (111), and the first abutting member (101) is located on a side of the inclined portion (111), the side of the inclined portion (111) being a side facing towards the second cavity (2s).

13. The energy storage device according to any one of claims 1 to 12, wherein the sealing element (3) includes a sealing ring.

14. The energy storage device according to any one of claims 1 to 12, wherein the sealing element (3) includes a glue.

15. An electric device, **characterized in that** the electric device comprises the energy storage device according to any one of claims 1 to 14.
